# EUROPÄISCHE PATENTANMELDUNG

(11) **EP 0 593 995 A1**
(43) Veröffentlichungstag der Anmeldung: **27.04.1994**
(21) Anmeldenummer: 93116303.4
(22) Anmeldetag: 08.10.1993
(51) Int. Cl.: H02J 13/00, H02B 1/24

(54) **Vorrichtung zur Kraftstromversorgung von Stromverbrauchern und ein Verfahren dafür**

(30) Priorität: 22.10.1992 AT 2098/92
(71) Anmelder: C.A. WEIDMÜLLER KG & Co. GESELLSCHAFT m.b.H., A-1220 Wien (AT)
(72) Erfinder: Noll, Franz, A-3041 Wimmersdorf 18 (AT)
(74) Vertreter: Puchberger, Peter, Dipl.-Ing.

(57) **Zusammenfassung**

Die Erfindung betrifft eine Vorrichtung zur Kraftstromversorgung von Stromverbrauchern, dadurch gekennzeichnet, daß
- der Kraftstrom durch eine durchgehende Kraftstromleitung (3) den Verbrauchern (2) oder der Verbrauchergruppe zugeleitet wird;
- die einzelnen Verbraucher (2) oder Verbrauchergruppen über Fernsteuer-Stationen (11,12) an die Kraftstromleitung (3) geschaltet sind;
- die Fernsteuer-Stationen (11,12) durch eine zentrale Steuerung (32) gesteuert sind.

## Beschreibung

Die Erfindung betrifft eine Vorrichtung zur Kraftstromversorgung von Stromverbrauchern und ein Verfahren dafür.

Bisher war es üblich, von einem Schaltschrank oder mehreren zentralen Schaltschränken den Kraftstrom zu schalten und vom Schaltschrank jeweils getrennte Leitungen zu den einzelnen Verbrauchern oder Verbrauchergruppen zu ziehen. Dies bedingte einen hohen Aufwand hinsichtlich Kabelmaterial, Kabelverlegung und zugehöriger Einrichtungen. Durch Materialaufwand und Arbeitszeit wurden die Kosten erhöht und auch das Service war damit verteuert.

Die Lösung vom Gesamtkonzept her liegt gemäß vorliegender Erfindung darin, die einzelnen Stromverbraucher nicht über zentrale Schalteinrichtungen zu schalten, sondern über ein Bussystem mit Remote-Stationen, die den einzelnen Verbrauchern oder Verbrauchergruppen zugeordnet sind. Ein derartiges System ist bisher für die Kraftstromversorgung nicht bekannt geworden.

Die Erfindung ist dadurch gekennzeichnet, daß
- der Kraftstrom durch eine durchgehende Kraftstrombusleitung den Verbrauchern oder der Verbrauchergruppe zugeleitet wird;
- die einzelnen Verbraucher oder Verbrauchergruppen über Remote-Stationen an die Kraftstrombusleitung geschaltet sind;
- die Remote-Stationen durch eine zentrale Steuerung gesteuert sind.

Weitere vorteilhafte Merkmale sind den Patentansprüchen, der nachfolgenden Beschreibung und den Zeichnungen zu entnehmen.

Nach weiteren Kennzeichen der Erfindung ist für die Remote-Stationen eine Betriebstrombusleitung vorgesehen. Die Remote-Stationen sind in vorteilhafter Weise durch einen Datenbus miteinander und mit einem zentralen Host-Rechner verbunden. Die Remote-Stationen umfassen wenigstens ein Modul, in dem die Ein- und Ausgänge der Kraftstrombusleitungen und der Betriebstrombusleitungen im Modulsockel jeweils miteinander verbunden (durchgeschliffen) sind. Weiters können die Remote-Stationen aus wenigstens zwei Modulen aufgebaut sein, einem Basis-Modul mit dem Transceiver und einem Aktiv-Modul, bevorzugt einem Power-Modul, wobei der Transceiver im Basis-Modul zur Verarbeitung der Daten des Datenbusses eingerichtet ist und im Power-Modul die Schaltvorrichtungen für den Kraftstrom des Kraftstombusses angeordnet sind. Jedes Modul umfaßt einen Modulsockel und darauf aufgesetzt ein gehäuseartiges Moduloberteil. Die Modulsockel weisen gleichen Aufbau auf und die Aktivmodule sind den jeweiligen Funktionen gemäß ausgebildet. Der Modulsockel weist einen Anschlußklemmenblock auf, der Anschlußklemmen für den Kraftstrombus und den Betriebstrombus aufweist. Der Modulsockel umfaßt ein Gehäuse mit zwei Anschlußflächen, wobei die Anschlußklemmen zwischen den beiden Anschlußflächen verlaufen, in denen Steckverbindungslöcher vorgesehen sind. Die Anschlußklemmen nebeneinander angeordneter Module werden über Steckverbindungen miteinander leitend verbunden. Der Anschlußklemmenblock kann zusätzlich noch mehrere Anschlußklemmen zum Anschluß der Stromverbraucher am Power-Modul aufweisen. Am Transceiver-Modul wird die Kraftstrombusleitung über einen Eingang eingespeist und über einen Ausgang zur nächsten Remote-Station weitergeleitet, wobei Eingang und Ausgang über die Anschlußkontakte verbunden sind. Im Power-Modul können die Leistungsschalter, bevorzugt Triac's-Leistungsschalter, vorgesehen sein, die über das Transceiver-Modul vom Host-Rechner geschaltet werden und den Kraftstrom von den Anschlußklemmen auf die weiteren Anschlußklemmen des Power-Moduls schalten. Die beiden freiliegenden Anschlußflächen einer Remote-Station werden bevorzugt durch Abschlußplatten abgedeckt. Die Modulsockel können einzeln oder gemeinsam durch Moduloberteile abgedeckt sein.

Das erfindungsgemäße Verfahren ist dadurch gekennzeichnet, daß der Kraftstrom durch eine durchgehende Kraftstrombusleitung den Verbrauchern oder eher Verbrauchergruppe zugeleitet wird, die einzelnen Verbraucher jeder Verbrauchergruppe, die über die Remote Stationen an die Kraftstrombusleitung geschaltet sind, über einen Datenbus von einem zentralen Rechner gesteuert und überwacht werden und gegebenenfalls ein Betriebsstrom über eine Betriebsstrombusleitung den Remote- Stationen zugeleitet wird.

Im folgenden wird die Erfindung anhand der Zeichnungen beispielsweise näher erläutert. Fig. 1 zeigt schematisch die Anordnung der erfindungsgemäßen Vorrichtung am Beispiel einer Förderanlage und Fig.2 ebenfalls schematisch das Interface-Konzept des zentralen Steuerschrankes. Fig.3 zeigt einen Überblick der Schaltung. Fig.4 ist eine schematische Darstellung des modulartigen Aufbaus eine Remote-Station. Fig. 5 ist eine teilweise geschnittene Seitenansicht einer 3-moduligen Remote-Station. Fig. 6 zeigt ein Modul in Ansicht von oben und Fig. 7 von vorne mit Blick auf eine der Kontaktflächen. Fig. 8 zeigt explosionsartig auseinandergezogen zwei Modulsockel einer Remote-Station von oben gesehen.

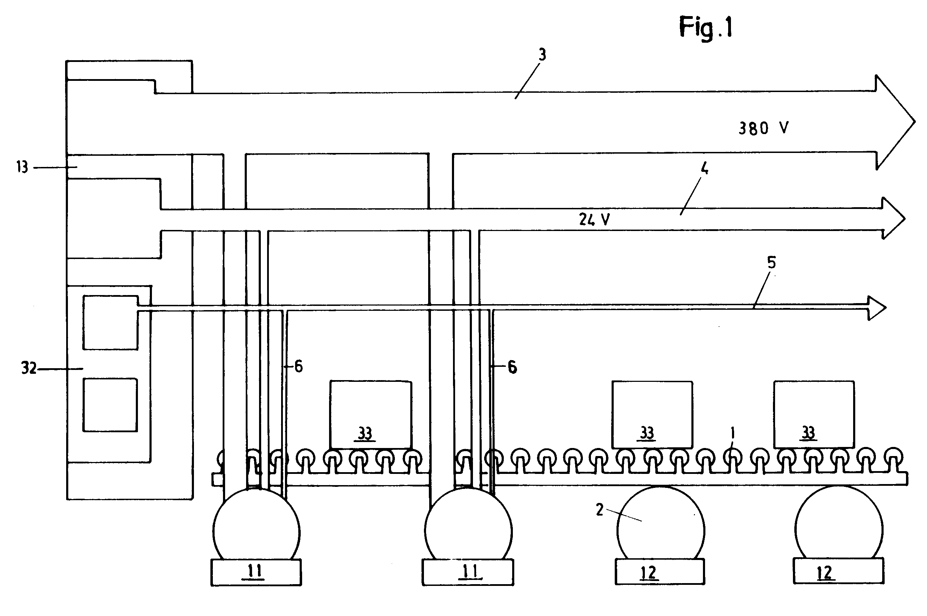

Fig. 1 zeigt schematisch einen Ausschnitt eine Förderanlage mit Laufrollen 1, die durch Motoren 2 angetrieben werden. Diese Motoren sind z. B. in Abständen von jeweils drei Metern angeordnet und sind 380 V-Motoren. Mit 3 ist der Kraftstrom bezeichnet, z. B. in Form eines gemeinsamen Kraftstromkabels mit fünf Adern. Es handelt sich hier nur um einen einzigen Kabelstrang für die Gruppe der Motoren dieses Systems. Selbstverständlich können innherhalb eines Systems auch zwei oder mehr Gruppen vorgesehen werden, die durch jeweils eigene Kabelstränge versorgt werden. Mit 4 ist als Betriebsstrombus die Stromversorgung der Remote-Stationen 11,12 dargestellt.

Weiters existiert noch als physikalisches Medium ein Datenbus 5 als Datenleitung, z. B. ein Koax-Kabel oder eine
RS 485 Übertragungsleitung, die von einem zentralen Host-Computersystem 32 im zentralen Steuerschrank 13 mit den enteprechenden Steuerdaten beschickt wird, die über die Anschlüsse 6 den Remote-Stationen zugeleitet wenden. Das von den Laufrollen 1 bewegte Transportgut 33 ist ebenfalls schematisch eingezeichnet.

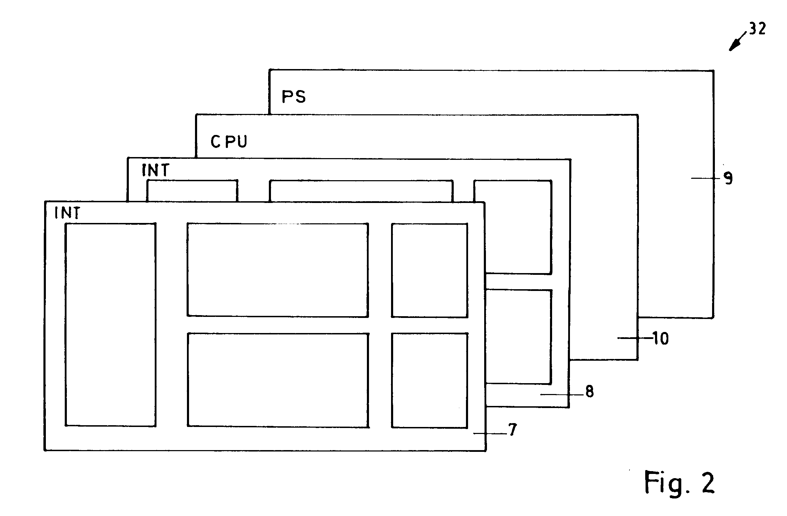

Fig. 2 zeigt schematisch die Anschaltung an das Host-Computersystem 32 (Frontend-Processor). Üblicherweise ist das Host-Computersystem ein Fremdsystem, das also nicht vom gleichen Hersteller geliefert wird, wie die anderen Schaltelemente. Aus diesem Grund ist eine weitgehende Anpassung notwendig. Die Anpassung erfolgt über die Interface-karten 7,8, die gleich aufgebaut sind. Die Karte 9 dient der Stromversorgung für den Host-Computer 32 und die Karte 10 enthält die CPU, also den Rechner selbst. Die beiden Interface-Karten 7,8 dienen dazu, die Ausgangs- und Eingangssignale der CPU, die über den internen Systembus laufen, an die Notwendigkeiten des externen Bussystems anzupassen. Es erfolgt eine Protokollumwandlung.

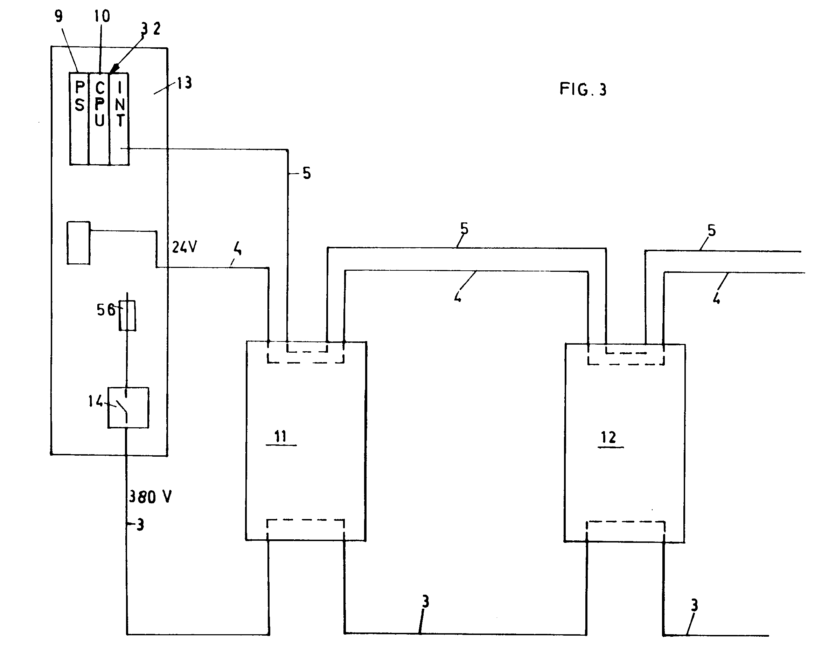

Fig. 3 zeigt die Anschaltung oder besser Durchschaltung bzw. Verdrahtung der einzelnen Remote-Stationen 11,12 mit dem zentralen Steuerschrank 13. Es ist ein Notausschaltschütz 14 vorgesehen, der selbstverständlich bei drei Phasen dreifach vorgesehen sein muß, oder ein Schütz-Element mit 3 Kontakten ist. Der Schaltschrank ist insoweit Stand der Technik. Wesentlich ist, daß in den Remote-Stationen 11,12 alle drei Leitungen, nämlich die Kraftstromleitung 3, die Stromversorgung 4 für die Remote-Stationen und das physikalische Medium, also die Datenleitung 5, durchgeschliffen sind. Die Leitungen sind also an keiner Stelle unterbrochen, sondern es werden die notwendigen Ströme oder Daten nur abgenommen, bzw. abgegriffen. Dadurch gibt es nur eine geringe Anfälligkeit gegen Störungen, da z. B. der Ausfall einer Platine oder einer Remote-Station nicht zu einer Unterbrechnung des Stromkreises oder Datenkreises führt.

Das Durchschleifen der Busleitung ist in den Remote-Stationen 11, 12 durch strichlierte Linien angedeutet. Es können beliebig viele Remote-Stationen angeschlossen werden, soweit es das Gesamtsystem zuläßt. Das Host-Computersystem 32 umfaßt, wie schematisch angedeutet ist, die CPU-Karte 10, die Stromversorgungskarte 9 (PS) und das Interface (NT) entsprechend den Interfacekarten 7, 8 gemäß Fig. 3. Übringe Elemente des Schaltschrankes wie z.B. die Sicherung 56 sind nur teilweise und schematisch angedeutet. Der Aufbau derartiger Schaltschränke ist im übrigen Stand der Technik.

Schon anhand der Fig. 3 läßt sich der einfache und damit kostengünstige Aufbau des gesamten Bussystems erkennen. Bei den herkömmlichen Systemen war es notwendig, an das Host-Computersysteme 32 eine Serie von Eingangs- und Ausgangskarten parallel anzuschließen. Jeder Kraftstromschalter benötigte einen eigenen Steuerausgang. Von diesen Steuerausgängen führten Leitungen zu jeweils einem eigenen Schütz oder Motorschutzschalter und von diesen Bauteilen erst gingen die Kraftstromleitungen zum Stromverbraucher, nämlich dem Motor. Dies alles mußte mit der Zahl der geschaltenen Motoren multipliziert vorgesehen werden. Gleiches ist zu den Eingängen zu sagen. Dies erforderte bei größeren Anlagen einen enormen Aufwand, die Anordnung mehrerer Schaltschränke und eine sehr große Anzahl von Schützen und Schutzschaltern.

Bei der erfindungsgemäßen Vorrichtung ist im Schaltschrank 13 nur ein Interface erforderlich, über das die Datenleitung 5 mit den entsprechenden Daten für alle Remote-Stationen 11,12 versorgt wird. Es sind die einzelnen Remote-Stationen 11, 12, die die entsprechenden Eingangs- und Ausgangskarten, sowie Schaltungseinrichtungen aufweisen.

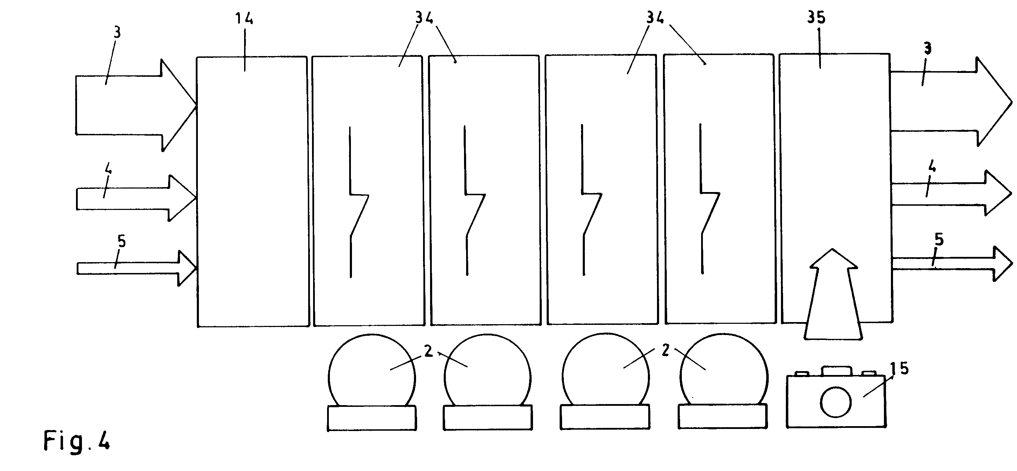

Fig. 4 zeigt den symbolischen Aufbau einer Remote-Station. Der Transceiver 14 ist der Sende- und Empfangsteil, welcher in jeder Station vorhanden sein muß und hat im Eingang den Datenbus 5 (physikalisches Medium). Der Trans-ceiver ist eine elektronische Funktionseinheit, die den Datenbus 5 überwacht, ihm gehörende Informationen entnimmt, oder in den Daten entsprechende Informationen einfügt. Die Power-Module 34 sind entweder einfach z. B. für einen Motor, oder mehrfach angeordnet, wenn durch die eine Remote-Station mehrere Motoren gesteuert werden sollen. Im vorliegenden Fall sind vier Power-Module 34 für vier Motoren 2 vorgesehen. Gesteuert wenden die Power-Module durch entsprechende Signale des Transceivers. Die Power-Module 34 können beispielsweise dazu eingerichtet sein, eine Motorüberlast zu erkennen und dies über den Transceiver an den Host-Computer zu melden, der dann die entsprechenden Steuerungsschritte veranlassen kann. Die Power-Module enthalten bevorzugt keine mechanischen Schütze, sondern vollelektronische Leistungsschalter (Triac's), deren Vorteile aus dem Stand der Technik wohl bekannt sind. Durch das Input-Modul 35 können über Sensoren 15, wie z.B. Lichtschranken, Näherungsschalter etc. Informationen erfaßt und entsprechende Signale in das Datenbussystem über den Transceiver 14 eingefügt werden. Die Sensoren 15 werden bevorzugt über eine genormte Steckverbindung mit dem Input-Modul verbunden.

Ein besonderer Vorteil ist durch den modulartigen Aufbau der Remote-Stationen gegeben. Über Steckverbindungen werden einzelne Module aneinander gereiht und verschraubt. Es ist damit vor Ort möglich, die entsprechende Konfiguration vorzusehen und ebenso einfach ist es möglich, Konfigurationsänderungen und Erweiterungen vorzunehmen.

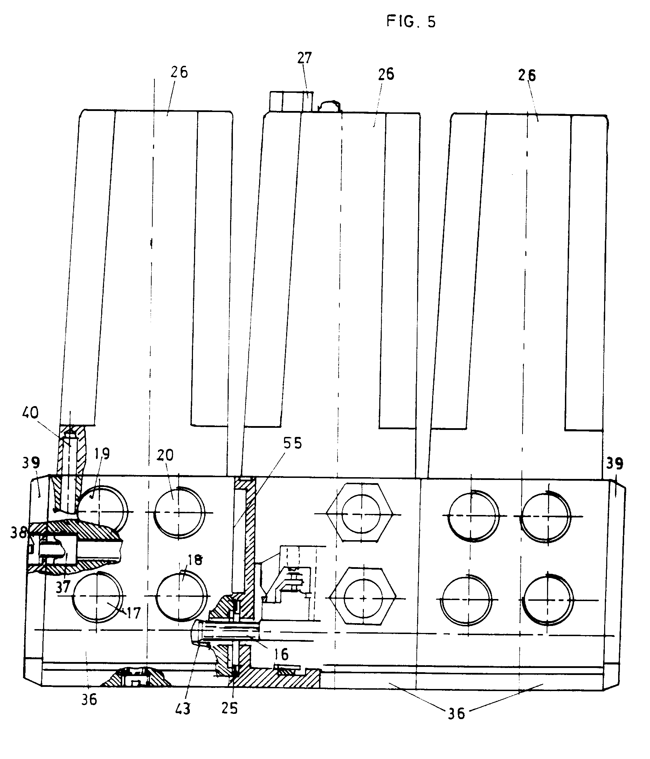

Im folgenden wird die bauliche Verwirklichung einer Remote-Station beschrieben, siehe insbesondere die Fig. 5 bis 7.

Eine Remote-Station umfaßt beispielsweise, wie schon zuvor erläutert, einen Transceiver, eine entsprechende Anzahl Power-Module und gegebenenfalls ein Input-Modul. Jedes dieser genannten Module belegt im System eine Teileinheit. Das in Fig. 5 links dargestellte Modul dient als Basismodul und die beiden rechten Module als Aktivmodule. Jedes Modul umfaßt einen Modulsockel 36 auf den ein gehäuseartiger Moduloberteil 26 aufgesteckt werden kann, und der auf den Modulsockel 36 dicht aufgeschraubt werden kann.

Wie weiter unten noch näher erläutert wird, werden mehrere Modulsockel über Steckverbindungen 16 miteinander verbunden. Über diese Steckverbindungen gelangt sowohl der 24V-Betriebsstrom als auch der 380V-Kraftstrom in alle Module einer Remote Station. Über den Eingang 17 gelangt das Kabel für den Datenbus in die Remote Station und über den Ausgang 18 wird der Datenbus zur nächsten Remote Station weitergeleitet. Mit 19 und 20 sind der Ein- und Ausgang der 24V-Stromversorgung bezeichnet. Die Ein- und Ausgänge des 380V-Kraftstromes befinden sich auf der gegenüberliegenden Seite des Basismoduls.

Die Module einer Remote-Station werden über Schraubverbindungen miteinander verbunden, wobei die Verbindung über die Modulsockel 36 erfolgt. Durch Dichtungen 25 zwischen den Modulsockeln und deren Anschlußflächen 55 wird die notwendige Dichtheit erzielt. Die Moduloberteile 26, die als Gehäuse wirken, sind gegenüber dem Modulsockel ebenfalls abgedichtet. Der in Fig.5 am mittleren Moduloberteil 26 dargestellte Eingang 27 kann beispielsweise ein Sensoreingang sein, oder aber auch z.B. ein 24V-Ausgang.

Die Verschraubung der Modulsockel 36 erfolgt über Schraubbolzen 37, die jedes Modul durchragen und in das danebenliegende Modul eingreifen. An den beiden endständigen Anschlußflächen der Modulsockel sind durch Schraüben 38 Abdeckungen 39 festgeschraubt, wobei die Befestigungsschrauben 38 in die Köpfe der Schraubbolzen 37 eingeschraubt sind.

Die gehäuseartigen Moduloberteile 26 können in verschiedenen Größen vorgesehen sein, sodaß sie entweder eine Baubreite (wie in Fig. 5 dargestellt) oder zwei oder mehrere Baubreiten umfassen. Dadurch ist eine Anpassung an die Leistungserfordernisse möglich. Bei Anordnung von mehreren Power-Modulen nebeneinander können alle diese Module unter ein Moduloberteil gebracht werden. In der Praxis wird das Moduloberteil 26 bevorzugt als Zinkguß-Bauteil vorgesehen, da Zinkguß billig in der Herstellung und schlagfest ist, sowie die Wärme gut angeben kann.

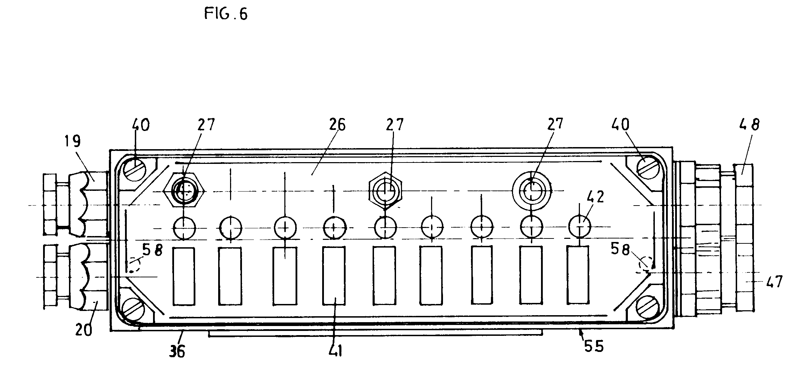

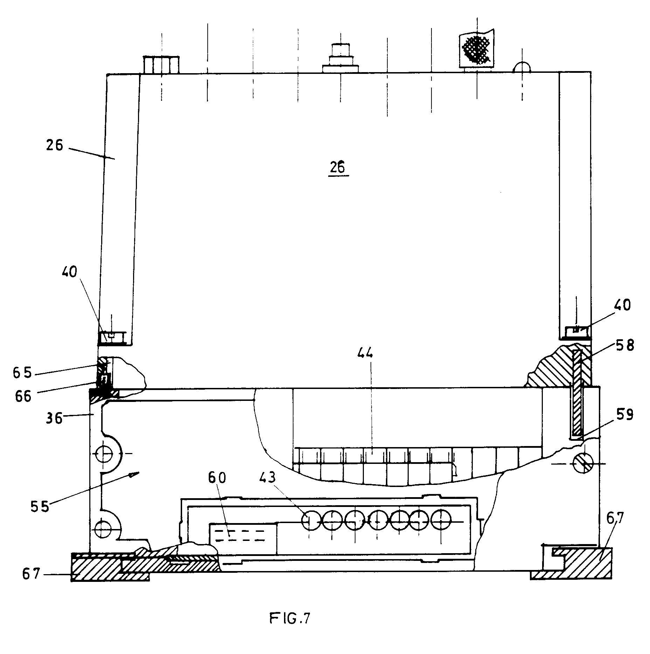

Die Fig. 6 und 7 zeigen eines der Module der Fig. 5 in Ansicht von oben und von der Seite. Der Moduloberteil 26 ist mittels vier Schrauben 40 am Modulsockel 36 angeschraubt. Führungsdorne 58, die in Ausnehmungen 59 des Modulsockels ragen, erleichtern das passgenaue Aufsetzen des Moduloberteils. In Fig. 6 sind links die beiden Anschlüsse 19, 20 für die 24 V-Leitung eingezeichnet. Über die Eingänge 27 können verschiedene Leitungen in das Modul eingeführt werden, wie z.B. der Anschluß eines Sensors. Die rechteckigen Flächen 41 dienen zum Aufkleben verschiedener Schilder. Mit 42 ist eine Reihe von Leuchtflächen bezeichnet, die verschiedene Zustände des Moduls anzeigen können.

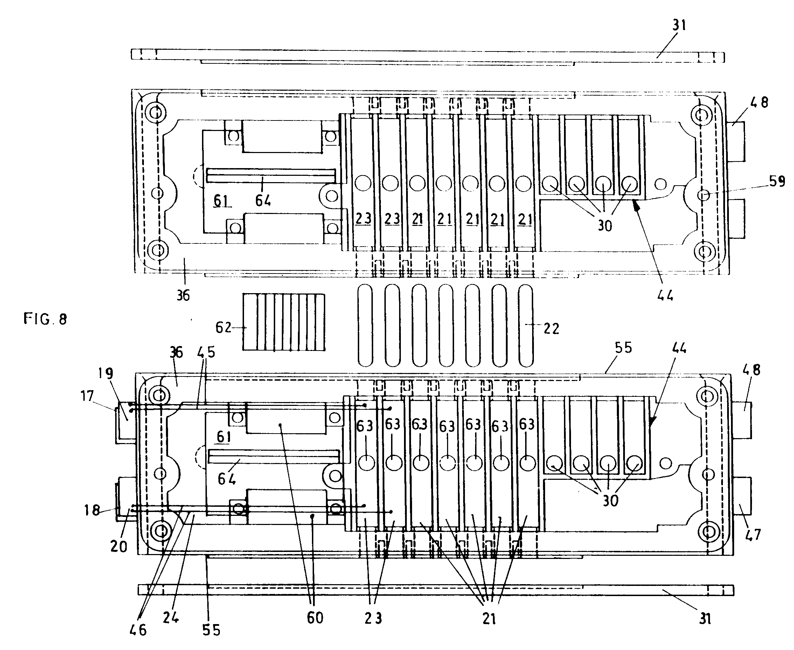

In Fig. 7 sieht man die Steckverbindungslöcher 43 zur Aufnahme der Steckbolzen 16 (Fig. 5) oder der Steckbolzen 22, wie sie in Fig. 8 eingezeichnet sind. Im Inneren des Modulsockels 36 liegt ein Anschlußklemmenblock 44, der die notwendigen Anschlußklemmen einschließlich der Steckverbindungslöcher 43 aufweist. Der Paralleleingangsstecker 60 ist mit einer Platine im Inneren des Modulsockels verbunden und dient zur Weiterführung der Adressleitungen des Transceivers zu den Schaltungsplatinen der Aktivmodule. Im Moduloberteil 26 können auf einer senkrecht stehenden Platine die Elektronik und/oder die Schaltelemente angeordnet werden. In Fig. 7 ist mit 65 das untere Ende eines Schlitzes bezeichnet, der zur Aufnahme dieser Platine eingerichtet ist. Am gegenüberliegenden Ende des Moduloberteiles ist ebenfalls ein solcher Schlitz vorgesehen. Mit der Madenschraube 66 ist die Platine fixiert. Mit Halteschienen 67 können die Module einer Remote-Station ortsfest montiert werden.

Fig. 8 zeigt in explosionsartig auseinandergezogener Stellung eine Remote-Station mit zwei Modulsockel 36 bei abgenommenen Moduloberteilen und ohne Verdrahtung.

Die Modulsockel 36 sind ident aufgebaut. Sie enthalten jeweils den Anschlußklemmblock 44 mit sieben Anschlußklemmen 21 und 23, die den Modulsockel 36 zur Gänze quer durchragen und mit den Anschlußklemmen 30, die kürzer ausgebildet sind.

Der in Fig. 8 eingezeichnete untere Modulsockel gehört zu einem Basismodul, während der obere Modulsockel zu einem Aktivmodul in Form eines Power-Moduls zur Schaltung eines Motors gehört. Über den Eingang 19 gelangen die mit 45 bezeichneten und nur schematisch angedeuteten Stromkabel der 24V-Leitung des Betriebstrombusses zu den beiden Anschlußklemmen 23, die direkt mit den Leitungen 46 des Ausgangs 20 verbunden sind. Somit ist der Eingang 19 mit dem Ausgang 20 direkt durchgeschaltet.

Die unterhalb der Ein- und Ausgänge 19, 20 liegenden Eingänge 17 und Ausgänge 18 für den Datenbus sind mit der im Raum 24 angeordneten Platine 61 verbunden, auf dessen Stecker 64 die nicht dargestellte Schaltungsplatine des Transceivers aufgesteckt ist. Auch der Datenbus ist über die Platine durchgeschaltet, sodaß auch der Datenbus unabhängig vom Schaltzustand der Remote-Station nicht unterbrochen ist. Die Adressleitungen führen von der Platine 61 zu zwei Paralleleingangssteckern 60 an den beiden Anschlußflächen des Modulsockels.

Die Anschlußklemmen 21 sind jeweils mit den einzelnen Drähten der 380V-Leitung verbunden, die über den Eingang 47 in den Modulsockel 36 eintritt und über den Ausgang 48 wieder austritt. Die zugehörige innere Verdrahtung ist aus Gründen der Übersichtlichkeit nicht dargestellt.

Die Anschlußklemmen 30 sind in dem soeben beschriebenen in Fig. 8 unten eingezeichneten Basismodul nicht belegt.

Über die Steckverbindungen 22 wird eine elektrische Verbindung zu dem in Fig. 8 oben eingezeichneten Power-Modul 36 bezüglich der Anschlußklemmen 21 und 23 hergestellt. Der Stecker 62 verbindet die Platinen 61 miteinander.

Innerhalb des Moduls werden die Anschlußklemmen 21 mit den zugehörigen Anschlußklemmen 30 unter Zwischenschaltung der darüber angeordneten Schaltelemente verdrahtet. Dieses Modul arbeitet als Power-Modul mit den entsprechenden Leistungsschaltern (Triac's). Die Stromanschlüsse nach oben erfolgen über die Anschlußlöcher 63. Die Anschlußklemmen 30 wirken als Leistungsabgang und die Kabel werden durch den Ausgang 48 zum zugehörigen Verbraucher z. B. Motor geleitet. Die übrigen Ein- und Ausgänge des Power-Moduls können durch Blindabdeckungen abgedeckt werden.

Die beiden außenliegenden Anschlußflächen der beiden Modulsockel 36 werden durch Abschlußplatten 31 abgedeckt, um nach außen hin den notwendigen dichten Abschluß zu bilden.

Wenn mehrere Verbraucher geschaltet werden sollen, können mehrere Power-Module angeschlossen werden. Stets sind alle Stromein- und - ausgänge durchgeschliffen, sodaß größtmögliche Betriebssicherheit gegeben ist.

Die Vorteile des erfindungsgemäßen Systems ergeben sich unter anderem daraus, daß für die Unterbringung der einzelnen Komponenten keine eigenen Schaltkästen notwendig sind. Es ergeben sich grundsätzlich die Vorteile des modularen Aufbaues. In jedem der Module sind alle notwendigen Anschlußstücke für jede Funktionsart des Moduls vorhanden. Das Anschließen der einzelnen Daten- und Kraftleitungen ist mit einfachen Mitteln möglich und die Anschlußwege sind sehr kurz. Für die Anschlüsse wird kein zusätzlicher Platz benötigt. Die Module sind äußerst servicefreundlich, da die aktiven Bauteile einfach abgeschraubt und ausgewechselt werden können.

Zur Anpassung an die Leistungen der Verbraucher können z. B. für die Schaltung eines Motors auch zwei nebeneinanderliegende Power-Module verwendet werden, sodaß die Leitungsquerschnitte innerhalb der Power-Module nicht verändert werden müssen, da sich diese Querschnitte der Power-Module addieren.

Durch die erfindungsgemäßen Vorrichtungen ist es möglich, hohe Schutzarten bis IP 68 zu erreichen, also hohe Spritzwasserfestigkeit. Es sind keine zusätzlichen Schutzgehäuse notwendig.

Das Durchschleifen der Busse im Modulsockel bringt auch den Vorteil mit sich, daß die Busse nicht unterbrochen werden, wenn zu Wartungs- oder Ausbauzwecken die Moduloberteile mit den darin befindlichen Steuerteilen und elektronischen Vorrichtungen abgenommen werden müssen. Jede Remote-Station umfaßt wenigstens ein Modul, nämlich das Basismodul.

## Patentansprüche

1. Vorrichtung zur Kraftstromversorgung von Stromverbrauchern dadurch gekennzeichnet, daß
- der Kraftstrom durch eine durchgehende Kraftstrombusleitung (3) den Verbrauchern (2) oder der Verbrauchergruppe zugeleitet wird;
- die einzelnen Verbraucher (2) oder Verbrauchergruppen über Remote-Stationen (11,12) an die Kraftstrombusleitung (3) geschaltet sind;
- die Remote-Stationen (11,12) durch eine zentrale Steuerung (32) gesteuert sind.

2. Vorrichtung nach Anspruch 1, dadurch gekennzeichnet, daß für die Remote-Stationen (11) eine Betriebstrombusleitung (4) vorgesehen ist.

3. Vorrichtung nach Anspruch 1 oder 2, dadurch gekennzeichnet, daß die Remote-Stationen (11,12) durch einen Datenbus (5) miteinander und mit einem zentralen Host-Rechner (32) verbunden sind.

4. Vorrichtung nach einem der vorhergehenden Ansprüche, dadurch gekennzeichnet, daß die Remote-Stationen wenigstens ein Modul umfassen, in dem die Ein- und Ausgänge der Kraftstrombusleitungen und der Betriebstrombusleitungen im Modulsockel jeweils miteinander verbunden (durchgeschliffen) sind.

5. Vorrichtung nach einem der vorhergehenden Ansprüche, dadurch gekennzeichnet, daß die Remote-Stationen (11,12) aus wenigstens zwei Modulen aufgebaut sind, einem Basis-Modul mit dem Transceiver (14) und einem Aktiv-Modul, bevorzugt einem Power-Modul (34), wobei der Transceiver (14) im Basis-Modul zur Verarbeitung der Daten des Datenbusses (5) eingerichtet ist und im Power-Modul (34) die Schaltvorrichtungen für den Kraftstrom des Kraftstrombusses (3) angeordnet sind.

6. Vorrichtung nach Anspruch 5, dadurch gekennzeichnet, daß jedes Modul einen Modulsockel (36) und darauf aufgesetzt ein gehäuseartiges Moduloberteil (26) umfaßt.

7. Vorrichtung nach einem der vorhergehenden Ansprüche, dadurch gekennzeichnet, daß die Modulsockel (36) gleichen Aufbau aufweisen und die Aktivmodule den jeweiligen Funktionen gemäß ausgebildet sind.

8. Vorrichtung nach einem der vorhergehenden Ansprüche, dadurch gekennzeichnet, daß der Modulsockel einen Anschlußklemmenblock (44) aufweist, der Anschlußklemmen (21, 23) für den Kraftstrombes (3) und den Betriebstrombus (4) aufweist.

9. Vorrichtung nach Anspruch 8, dadurch gekennzeichnet, daß der Modulsockel (36) ein Gehäuse mit zwei Anschlußflächen (55) aufweist und daß die Anschlußklemmen (21, 23) zwischen den beiden Anschlußflächen (55) verlaufen, in denen Steckverbindungslöcher (43) vorgesehen sind.

10. Vorrichtung nach Anspruch 9, dadurch gekennzeichnet, daß die Anschlußklemmen (21,23) nebeneinander angeordneter Module über Steckverbindungen (22) miteinander leitend verbunden sind.

11. Vorrichtung nach einem der vorhergehenden Ansprüche, dadurch gekennzeichnet, daß der Anschlußklemmenblock (44) zusätzlich noch mehrere Anschußklemmen (30) zum Anschluß der Stromverbraucher (2) am Power-Modul aufweist.

12. Vorrichtung nach einem der vorhergehenden Ansprüche, dadurch gekennzeichnet, daß am Transceiver-Modul die Kraftstrombusleitung über einen Eingang (47) eingespeist und über einen Ausgang (48) zur nächsten Remote-Station weitergeleitet wird, wobei Eingang und Ausgang über die Anschlußkontakte (21) verbunden sind.

13. Vorrichtung nach einem der vorhergehenden Ansprüche, dadurch gekennzeichnet, daß im Power-Modul die Leistungsschalter, bevorzugt Triac's-Leistungsschalter, vorgesehen sind, die über das Transceiver-Modul vom Host-Rechner geschaltet werden und den Kraftstrom von den Anschlußklemmen (21) auf die weiteren Anschlußklemmen (30) des Power-Moduls schalten.

14. Vorrichtung nach einem der vorhergehenden Ansprüche, dadurch gekennzeichnet, daß die beiden freiliegenden Anschlußflächen (55) einer Remote-Station durch Abschlußplatten (31) angedeckt sind.

15. Vorrichtung nach einem der vorhergehenden Ansprüche, dadurch gekennzeichnet, daß Modulsockel einzeln oder gemeinsam durch Moduloberteile (26) abgedeckt sind.

16. Verfahren zur dezentralen Kraftstromversorgung von Kraftstromverbrauchern, dadurch gekennzeichnet, daß
- der Kraftstrom durch eine durchgehende Kraftstrombusleitung den Verbrauchern oder einer Verbrauchergruppe zugeleitet wird,
- die einzelnen Verbraucher oder Verbrauchergruppen , die über Remote-Stationen an die Kraftstrombusleitung geschaltet sind, über einen Datenbus von einem zentralen Rechner gesteuert und überwacht werden,
- und gegebenenfalls ein Betriebsstrom über eine Betriebsstrombusleitung den Remote-Stationen zugeleitet wird.
